# FASCICULE DE BREVET EUROPEEN

(11) **EP 2 327 569 B1**
(45) Date de publication et mention de la délivrance du brevet: **01.05.2013**
(21) Numéro de dépôt: 10192417.3
(22) Date de dépôt: 24.11.2010
(51) Int. Cl.: B60B 37/10, B65F 1/14, B60B 3/00

(54) **Bac de collecte de déchets muni d'une roue à nez**
Abfallsammelbehälter, der mit einem Bugrad ausgestattet ist
Refuse collection container equipped with a nosewheel

(30) Priorité: 25.11.2009 FR 0958377
(43) Date de publication de la demande: 01.06.2011
(73) Titulaire: COMPAGNIE PLASTIC OMNIUM, 69007 Lyon (FR)
(72) Inventeur: Schmidt, Olivier, 15240 Saignes (FR)
(74) Mandataire: Remy, Vincent Noel Paul

(56) Documents cités:
- EP-A1- 0 508 902
- EP-A1- 0 808 729
- EP-A1- 2 062 746
- DE-A1- 3 312 590
- DE-U1- 8 507 012
- DE-U1- 8 628 385
- DE-U1- 8 712 211

## Description

La présente invention concerne un bac de collecte de déchets comprenant au moins une roue et un bandage, la roue étant destinée à être montée de manière amovible sur un essieu du bac.

On connaît, d'après le document EP 0 808 729 qui forme l'état de la technique le plus proche selon le préambule de la revendication 1, un bac dont la roue est retenue sur l'essieu au moyen d'un dispositif de type "bonhomme à billes". Ce dispositif comprend un organe mobile apte à coopérer avec un évidement ménagé dans l'essieu du bac pour immobiliser la roue en translation par rapport à l'essieu suivant une direction axiale de l'essieu. L'organe mobile est apte à adopter une position de verrouillage dans laquelle il coopère avec l'évidement pour réaliser l'immobilisation et une position de libération dans laquelle il ne s'oppose pas au mouvement axial de la roue sur l'essieu. Pour maintenir l'organe en position de verrouillage, la roue comprend un ressort de rappel agencé pour solliciter en permanence l'organe en direction de l'essieu. Un telle roue permet de garantir un meilleur roulage du conteneur.

L'assemblage de la roue, du bandage, de l'organe mobile et du ressort est délicat et relativement long.

L'invention a notamment pour but de proposer un bac de collecte de déchets dont l'assemblage est plus simple que celui de l'état de la technique.

A cet effet, l'invention a pour objet un bac de collecte de déchets, comprenant :
- un essieu,
- au moins une roue, comportant un moyeu monté sur l'essieu, la roue muni d'un conduit s'étendant essentiellement selon une direction radiale de celle-ci et dont une embouchure débouche sur le moyeu, un ressort hélicoïdal comportant une première portion à spires jointives et une deuxième portion à spires non jointives étant agencé dans le conduit de sorte qu'au moins une partie de sa première portion soit apte à faire saillie du conduit par l'embouchure.

Ainsi, le bac de collecte selon l'invention comprend une roue dans laquelle le système organe mobile et ressort de rappel a été remplacé par une unique pièce formée par un ressort.

La première portion de ce ressort avec ses spires jointives, du fait de son enroulement resserré, ne se déforme pas ou très peu selon la direction axiale lorsque le ressort est sollicité selon cette direction. Il peut donc agir comme l'organe mobile de l'état de la technique et réaliser l'immobilisation ou la libération de la roue en coopérant avec l'évidement de l'essieu.

Comme ses spires sont jointives, le ressort est apte à résister aux contraintes en cisaillement auxquelles il est soumis.

La deuxième portion du ressort agit comme le ressort de l'état de la technique et exerce une force de rappel sur la première portion pour maintenir celle-ci en position de verrouillage relativement à l'évidement de l'essieu.

Ainsi, le bac de collecte selon l'invention remplit les mêmes fonctions que celui de l'état de la technique mais avec une unique pièce dans le conduit, soit une pièce en moins que dans l'état de la technique. Cela simplifie le montage et le démontage de la roue, pouvant être effectués plus rapidement. Les coûts de fabrication et de montage d'un bac de collecte selon l'invention sont donc substantiellement diminués.

Le bac de collecte selon l'invention peut comprendre l'une ou plusieurs des caractéristiques de la liste ci-dessous :
- l'essieu comprend un évidement agencée en vis-à-vis de l'embouchure du conduit.
   L'évidement peut être par exemple une gorge circonférentielle ménagée à la surface de l'essieu, et dimensionné pour accueillir la première portion du ressort,
- le conduit radial est de forme essentiellement cylindrique. Le ressort peut également être de forme essentiellement cylindrique,
- le diamètre de la première portion du ressort est inférieur au diamètre de la deuxième portion de celui-ci. Ainsi, le ressort présente un épaulement entre ses deux portions, ce qui peut empêcher la deuxième portion du ressort d'entrer dans l'évidement. Cela permet également de faciliter le montage du ressort, le sens correct de montage de celui-ci dans le conduit pouvant être plus facilement identifié,
- la section de la première portion peut être de forme distincte de celle de la deuxième portion. Elle peut par exemple être rectangulaire ou comporter un méplat alors que celle de la première portion est circulaire. Cela permet également de différencier les deux portions du ressort à des fins de montage. En outre, lorsque la première portion est rectangulaire ou comporte un méplat, les contraintes en cisaillement subies par le ressort sont mieux réparties sur celui-ci, la surface de la première portion en contact avec les parois de l'essieu délimitant l'évidement étant plus importante,
- l'embouchure étant une première embouchure, le conduit est ouvert à son extrémité axiale opposé à la première embouchure et présente à cette extrémité une deuxième embouchure débouchant sur un bandage de roue, monté à l'extrémité radiale de la roue,
- un organe, par exemple une bille, est monté dans le conduit de façon à être inséré entre la deuxième portion du ressort et le bandage de roue,
- en variante, la deuxième portion du ressort est directement en appui contre le bandage de roue,
- la longueur au repos du ressort est supérieure à la longueur du conduit. Ainsi, la deuxième portion du ressort est placée en compression dans le conduit et exerce une force de rappel sur la première portion,
- le ressort est réalisé en un matériau métallique, par exemple en acier, de préférence en un matériau traité contre la corrosion,
- le bandage est réalisé en un matériau élastique, par exemple en caoutchouc ou en mousse. Le bandage peut être plein ou non,
- le conduit latéral comprend un évidement dans sa paroi latérale à son extrémité située au voisinage du moyeu. Cet évidement permet le passage d'un élément depuis l'extérieur du conduit pour compresser le ressort et permettre la libération de l'essieu de la roue.

L'invention a également pour objet une roue telle que définie précédemment, destinée à être mise en place sur un bac de collecte de déchets. Une telle roue comprend un moyeu apte à être monté sur un essieu du bac, la roue étant en outre munie d'un conduit s'étendant essentiellement selon une direction radiale de celle-ci et dont une embouchure débouche sur le moyeu, un ressort hélicoïdal comportant une première portion à spires jointives et une deuxième portion à spires non jointives étant agencé dans le conduit de sorte qu'au moins une partie de sa première portion soit apte à faire saillie du conduit par l'embouchure.

Elle peut également comprendre les caractéristiques de la roue appartenant au bac selon l'invention, et listées ci-dessus.

L'invention sera mieux comprise à la lecture de la description qui va suivre, donnée uniquement à titre d'exemple et faite en se référant aux dessins dans lesquels :
- la figure 1 est une partie d'une coupe axiale d'un bac selon un mode de réalisation particulier de l'invention dans lequel la roue se trouve dans une position d'immobilisation par rapport à l'essieu,
- la figure 2 est un schéma identique à celui de la figure 1 dans lequel la roue est mobile par rapport à l'essieu,
- la figure 3 est une vue en perspective d'un ressort du bac des figures 1 et 2.

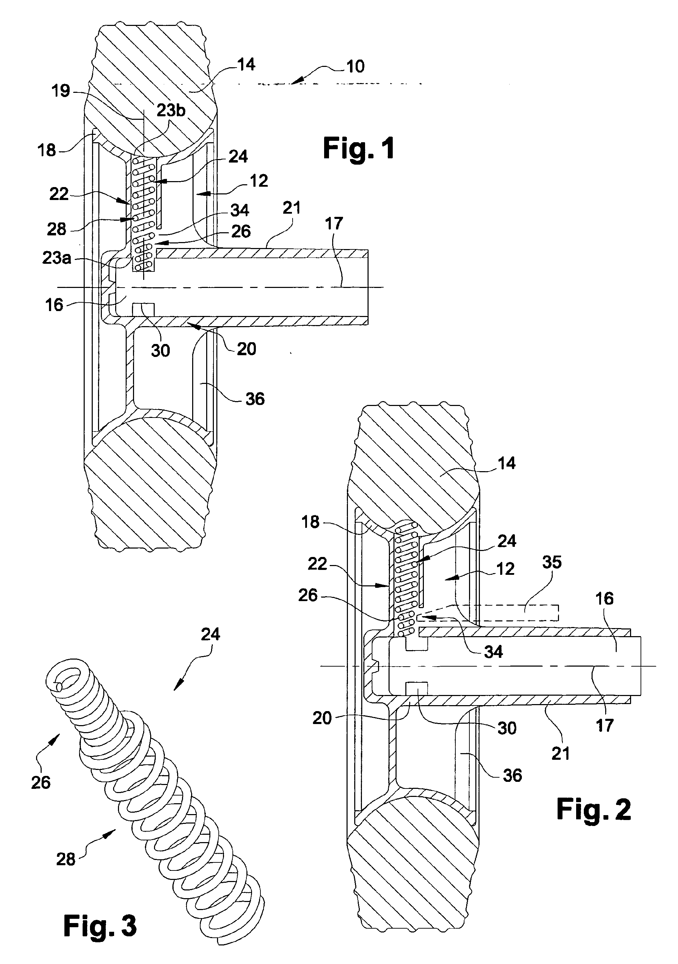

On a représenté sur la figure 1 une partie inférieure d'un bac de collecte de déchets 10 selon un mode de réalisation de l'invention, le bac comprenant un essieu 16, une roue 12 montée sur l'essieu et un bandage 14 monté sur la roue 12.

L'essieu 16 est généralement réalisé en un matériau métallique alors que la roue 12 est réalisée en un matériau thermoplastique rigide, tel que du polypropylène. Le bandage 14 peut quant à lui être réalisé en un matériau élastique, ce matériau étant tel que du caoutchouc ou de la mousse.

La roue 12 comprend une jante 18 formant support pour le bandage 14, et un moyeu 20 destiné à coopérer avec l'essieu 16 par emboîtement. Le moyeu 20 est creux et a une forme sensiblement cylindrique de révolution autour d'un axe 17. L'essieu 16 a également une forme générale cylindrique de révolution autour d'un axe 17. L'axe de l'essieu et l'axe du moyeu sont sensiblement confondus. Les dimensions de l'essieu le rendent apte à pénétrer dans le moyeu 20 de sorte que l'essieu et le moyeu forment respectivement des organes mâle et femelle. Dans l'exemple représenté, le moyeu 20 se prolonge vers l'essieu 16 par un manchon cylindrique 21 ayant une fonction de guidage de l'essieu dans le moyeu.

La roue 12 comprend en outre un conduit 22 radial par rapport à l'axe du moyeu et débouchant sur la jante 18 et sur la partie du moyeu 20 destinée à venir en contact avec l'essieu. Le conduit 22 est de forme cylindrique de révolution et d'axe 19 sensiblement radial.

Le conduit 22 comprend plus particulièrement une première embouchure 23a débouchant sur le moyeu et disposée en regard de l'essieu lorsque la roue est montée sur le bac de collecte et une deuxième embouchure 23b débouchant sur la jante et en contact avec le bandage 14 lorsque celui-ci est monté sur la roue

Un ressort hélicoïdal 24 est en outre agencé dans le conduit radial 22 de la roue 12, de sorte que son axe corresponde essentiellement à celui 19 du conduit. Le ressort est réalisé en un matériau métallique, tel que l'acier, traité contre la corrosion.

Comme on le voit plus particulièrement sur la figure 3, le ressort comprend une première portion 26 à spires jointives, s'étendant essentiellement sur un quart de la longueur au repos du ressort, et une deuxième portion 28 à spires non jointives, s'étendant sur la longueur restante de celui-ci.

Le ressort 24 est de section circulaire sur toute sa longueur mais la première portion 26 présente un diamètre inférieur à celui de la deuxième portion 28, permettant de faciliter la reconnaissance de la première portion relativement à la deuxième et de faciliter le bon montage du ressort dans le conduit.

Le ressort 24 est conformé de telle façon que la première portion 26 n'est pas ou peu compressible axialement, du fait d'un enroulement axial resserré des spires dans cette partie alors que la deuxième portion 28 est compressible selon la direction axiale du ressort.

Le ressort 24 est agencé dans le conduit radial 22 de sorte que la première portion 26 du ressort soit placée au voisinage de la première embouchure 23a, alors que la deuxième portion est placée au voisinage de la deuxième embouchure 23b.

Le ressort 24 peut prendre plusieurs positions dans le conduit 22 et peut notamment prendre une position de libération de l'essieu représentée sur la figure 2 et une position d'immobilisation de celui-ci représentée sur la figure 1.

En l'espèce, la longueur au repos du ressort 24 est supérieure à la longueur du conduit radial 22 et le bandage 14, dans sa position normale d'utilisation, obture l'embouchure du conduit sur la jante 18. Dans la position au repos du ressort, au moins une partie de la première portion 26 de celui-ci est donc en saillie du conduit par la première embouchure de celui-ci. L'extrémité du ressort appartenant à la deuxième portion 28 est en contact avec le bandage.

Dans la position d'immobilisation, le ressort 24 coopère par emboîtement de sa première portion avec un évidement 30 ménagé sur l'essieu 16. L'évidement 30 comprend une gorge circonférentielle ménagée dans l'essieu 16 et agencée sur celui-ci pour que la gorge 30 se trouve en face de la première embouchure 23a du conduit 22, lorsque la roue 12 est montée sur l'essieu. Dans la position d'immobilisation, le ressort 24, en particulier la deuxième portion 28 de celui-ci est en légère compression, pour exercer une force de rappel sur la première portion 26 et éviter que l'emboîtement entre la roue et l'essieu ne soit désactivé. Une fois la première portion mise en place dans la gorge 30, l'essieu est bloqué en translation axiale relativement à la roue.

Comme représenté sur la figure 2, lorsque le ressort 24 est en position de libération, la deuxième portion 28 du ressort 24 est compressée de sorte que sa longueur soit moins importante que dans la position de verrouillage, de sorte que la longueur du ressort soit inférieure à la longueur du conduit radial. La première portion 26 du ressort 24 est donc entièrement mise en place dans le conduit. On permet ainsi le déplacement axial de l'essieu, celui-ci pouvant passer en regard du conduit même dans sa section ne comportant pas la gorge.

Lorsque l'essieu 16 est déjà mis en place dans le moyeu 20, la position de libération est atteinte en insérant dans un évidement 34, présent sur une paroi latérale du conduit latéral 22, un élément permettant d'agir sur le ressort au niveau de l'épaulement situé entre les première et deuxième portions 26, 28 de celui-ci, tel que l'élément 35 représenté sur la figure 2 en pointillés. Cela permet ainsi de compresser la deuxième portion du ressort, de sorte que toute la longueur de celui-ci soit contenue dans le conduit radial. Cet élément est introduit par le côté intérieur de la roue, dans un dégagement de celle-ci situé entre les nervures 36 et peut être constitué par un stylo ou tournevis, etc.

Si la longueur incompressible du ressort est supérieure à celle du conduit, le passage de l'essieu est tout de même permis car l'extrémité de la deuxième portion 28, en contact avec le bandage 14, déforme la partie de bandage en contact avec la jante 18 de manière à occuper en partie un emplacement du bandage sur la roue en position normale d'utilisation, comme on le voit sur la figure 2. La première portion 26 peut être intégralement située dans le conduit et le passage de l'essieu est permis.

L'invention n'est bien entendu pas limitée au mode de réalisation décrit.

Le conduit radial 22 pourrait être borgne et ne pas comprendre de deuxième embouchure. Un organe telle qu'une bille pourrait également être mis en place dans le conduit, de façon à être en contact avec la deuxième portion du ressort.

En outre, le ressort peut ne pas être de section circulaire. Une des deux portions peut également être de section différente de la première portion. Il est également envisageable que les deux portions présentent le même diamètre.

L'évidement de l'essieu peut également être d'un autre type qu'une gorge circulaire.

Les matériaux des différents éléments ne sont pas non plus limités à ce qui a été décrit.

## Revendications

1. Bac (10) de collecte de déchets, comprenant:
- un essieu (16),
- au moins une roue (12) comportant un moyeu (20) monté sur l'essieu,
la roue étant munie d'un conduit (22) s'étendant essentiellement selon une direction radiale de celle-ci et dont une embouchure (23a) débouche sur le moyeu, et un ressort hélicoïdal (24), **caractérisé en ce que** le ressort hélicoïdal comporte une première portion (26) à spires jointives et une deuxième portion (28) à spires non jointives et est agencé dans le conduit de sorte qu'au moins une partie de sa première portion soit apte à faire saillie du conduit par l'embouchure.

2. Bac selon la revendication précédente, dans lequel l'essieu (16) comprend un évidement, tel qu'une gorge circonférentielle (30), agencé en vis-à-vis de l'embouchure (23a) du conduit (22).

3. Bac selon l'une quelconque des revendications précédentes, dans lequel le diamètre de la première portion (26) du ressort est inférieur au diamètre de la deuxième portion (28) de celui-ci.

4. Bac selon l'une quelconque des revendications précédentes, dans lequel la section de la première portion (26) du ressort est de forme distincte de celle de la deuxième portion (28) de celui-ci.

5. Bac selon l'une quelconque des revendications précédentes, dans lequel, l'embouchure (23a) étant une première embouchure, le conduit est ouvert à son extrémité axiale opposé à la première embouchure et présente à cette extrémité une deuxième embouchure (23b) débouchant sur un bandage de roue (14), monté à l'extrémité radiale de la roue.

6. Bac selon la revendication précédente, dans lequel la deuxième portion (26) du ressort (24) est directement en appui contre le bandage de roue (14).

7. Bac selon l'une quelconque des revendications 1 à 6, dans lequel un organe, par exemple une bille, est monté dans le conduit de façon à être inséré entre la deuxième portion du ressort et le bandage de roue.

8. Bac selon l'une quelconque des revendications précédentes, dans lequel la longueur au repos du ressort (24) est supérieure à la longueur du conduit (22).

9. Bac selon l'une quelconque des revendications précédentes, dans lequel le ressort (24) est réalisé en un matériau métallique, de préférence traité contre la corrosion.

10. Roue (12) pour un bac de collecte de déchets, comprenant un moyeu (20) apte à être monté sur un essieu (16) du bac, la roue étant munie d'un conduit (22) s'étendant essentiellement selon une direction radiale de celle-ci et dont une embouchure (23a) débouche sur le moyeu, la roue comprenant un ressort hélicoïdal (24), **caractérisée en ce que** le ressort hélicoïdal comporte une première portion (26) à spires jointives et une deuxième portion (28) à spires non jointives et est agencé dans le conduit de sorte qu'au moins une partie de sa première portion soit apte à faire saillie du conduit par l'embouchure.

## Claims

1. A refuse collection bin (10) comprising:
• an axle (16); and
• at least one wheel (12) having a hub (20) mounted on the axle, the wheel being provided with a duct (22) extending essentially in a radial direction of the wheel and having an opening (23a) that opens out to the hub, the wheel also having a helical spring (24) ;
the bin being **characterized in that** the helical spring comprises a first portion (26) with touching turns and a second portion (28) with non-touching turns, and is arranged in the duct in such a manner that at least a fraction of its first portion is suitable for projecting from the duct through the opening.

2. A bin according to the preceding claim, wherein the axle (16) includes a recess, such as a circumferential groove (30), arranged facing the opening (23a) of the duct (22).

3. A bin according to either preceding claim, wherein the diameter of the first portion (26) of the spring is less than the diameter of its second portion (28).

4. A bin according to any preceding claim, wherein the section of the first portion (26) of the spring is of a shape that is different from the shape of the section of its second portion (28).

5. A bin according to any preceding claim, wherein the opening (23a) is a first opening and the duct is open at its axial end opposite from the first opening and presents a second opening (23b) at said opposite axial end, the second opening (23b) opening out to a wheel tire (14) mounted at the radial end of the wheel.

6. A bin according to the preceding claim, wherein the second portion (26) of the spring (24) bears directly against the wheel tire (14).

7. A bin according to any one of claims 1 to 6, wherein a member, e.g. a ball, is mounted in the duct so as to be inserted between the second portion of the spring and the wheel tire.

8. A bin according to any preceding claim, wherein the length at rest of the spring (24) is greater than the length of the duct (22).

9. A bin according to any preceding claim, wherein the spring (24) is made of a metal material, and is preferably treated against corrosion.

10. A wheel (12) for a refuse collection bin, the wheel comprising a hub (20) suitable for being mounted on an axle (16) of the bin, the wheel being provided with a duct (22) extending essentially in a radial direction of the wheel and having an opening (23a) that opens out to the hub, the wheel including a helical spring (24) and being **characterized in that** the helical spring has a first portion (26) with touching turns and a second portion (28) with non-touching turns, and is arranged in the duct in such a manner that at least a fraction of its first portion is suitable for projecting from the duct through the opening.

## Patentansprüche

1. Behälter (10) zum Sammeln von Abfall, der aufweist:
- eine Achse (16),
- wenigstens ein Rad (12), das eine Nabe (20), die auf der Achse montiert ist, aufweist,
wobei das Rad mit einem Kanal (22) versehen ist, der sich im Wesentlichen entlang einer Richtung radial zu diesem erstreckt und von welchem eine Mündung (23a) auf der Nabe mündet, und einer Spiralfeder (24), **dadurch gekennzeichnet, dass** die Spiralfeder einen ersten Teil (26) mit nebeneinanderliegenden Windungen und einen zweiten Teil (28) mit nicht nebeneinanderliegenden Windungen aufweist, und in dem Kanal derart eingerichtet ist, dass wenigstens ein Teil ihres ersten Teils dazu geeignet ist, aus dem Kanal durch die Mündung vorzustehen.

2. Behälter nach dem vorhergehenden Anspruch, bei dem die Achse (16) eine Aussparung aufweist, wie zum Beispiel eine umfängliche Hohlkehle (30), die gegenüber der Mündung (23a) des Kanals (22) eingerichtet ist.

3. Behälter nach einem der vorhergehenden Ansprüche, bei dem der Durchmesser des ersten Teils (26) der Feder kleiner ist als der Durchmesser des zweiten Teils (28) dieser.

4. Behälter nach einem der vorhergehenden Ansprüche, bei dem der Querschnitt des ersten Teils (26) der Feder eine unterschiedliche Form von der des zweiten Teils (28) dieser hat.

5. Behälter nach einem der vorhergehenden Ansprüche, bei dem die Mündung (23a) eine erste Mündung ist, wobei der Kanal an seinem axialen Ende gegenüber der ersten Mündung offen ist und an diesem Ende eine zweite Mündung (23b) aufweist, die auf einen Radreifen (14), der an dem radialen Ende des Rads installiert ist, mündet.

6. Behälter nach dem vorhergehenden Anspruch, bei dem der zweite Teil (26) der Feder (24) direkt auf dem Radreifen (14) aufliegt.

7. Behälter nach einem der Ansprüche 1 bis 6, bei dem ein Organ, zum Beispiel eine Kugel, in dem Kanal derart montiert ist, dass es zwischen dem zweiten Teil der Feder und dem Radreifen eingefügt ist.

8. Behälter nach einem der vorhergehenden Ansprüche, bei dem die Länge im Ruhezustand der Feder (24) größer ist als die Länge des Kanals (22).

9. Behälter nach einem der vorhergehenden Ansprüche, bei dem die Feder (24) aus einem metallischen Werkstoff besteht, der vorzugsweise gegen Korrosion behandelt ist.

10. Rad (12) für einen Abfallsammelbehälter, das eine Nabe (20) aufweist, die dazu geeignet ist, auf eine Achse (16) des Behälters montiert zu werden, wobei das Rad mit einem Kanal (22) versehen ist, der sich im Wesentlichen entlang einer Richtung radial zu diesem erstreckt und von welchem eine Mündung (23a) auf der Nabe mündet, wobei das Rad eine Spiralfeder (24) aufweist, **dadurch gekennzeichnet, dass** die Spiralfeder einen ersten Teil (26) mit nebeneinanderliegenden Windungen und einen zweiten Teil (28) mit nicht nebeneinanderliegenden Windungen aufweist, und in dem Kanal derart eingerichtet ist, dass wenigstens ein Teil ihres ersten Teils dazu geeignet ist, aus dem Kanal durch die Mündung vorzustehen.
